Europäisches Patentamt

(19) European Patent Office

Office européen des brevets

(11) Veröffentlichungsnummer: **0 068 424**
**B1**

(12) **EUROPÄISCHE PATENTSCHRIFT**

(45) Veröffentlichungstag der Patentschrift:
09.04.86

(51) Int. Cl.⁴: **F 16 C 7/00**

(21) Anmeldenummer: 82105493.9

(22) Anmeldetag: 23.06.82

(54) Hybrides Verbindungsglied, insbesondere Pleuel oder Schäkel, sowie ein Verfahren zu dessen Herstellung.

(30) Priorität: 26.06.81 CH 4239/81

(43) Veröffentlichungstag der Anmeldung:
05.01.83 Patentblatt 83/1

(45) Bekanntmachung des Hinweises auf die Patenterteilung:
09.04.86 Patentblatt 86/15

(84) Benannte Vertragsstaaten:
DE FR GB IT

(56) Entgegenhaltungen:
EP - A - 0 031 413
EP - A - 0 032 162
EP - A - 0 052 993
DE - B - 2 918 028
FR - A - 1 551 946
FR - A - 2 375 503
GB - A - 1 364 317
GB - A - 2 057 630

(73) Patentinhaber: GEORG FISCHER
AKTIENGESELLSCHAFT, Mühlentalstrasse 105,
CH-8201 Schaffhausen (CH)

(72) Erfinder: Vogel, Werner, Dipl.-Chem., Neustadt 73,
CH-8200 Schaffhausen (CH)
Erfinder: Gut, Karl, Dr., Dipl.-Chem.-Ing., Neusatz,
CH-8463 Benken (CH)
Erfinder: Meister, Herbert, Rebbergstrasse 92,
CH-8240 Thayngen (CH)
Erfinder: Molnar, Laszlo F., Dipl.-Ing., Gartenstrasse 25,
D-7712 Blumberg 1 (DE)
Erfinder: Voegeli, Marcel, Dr., Riethaldenstieg 5,
CH-8200 Schaffhausen (CH)

## Beschreibung

Die Erfindung betrifft ein Verbindungsglied aus Metall und Kunststoff gemäss dem Oberbegriff des Anspruches 1.

Ferner bezieht sich die Erfindung auf ein Verfahren zur Herstellung des Verbindungsgliedes nach Anspruch 9.

Als typisches Beispiel eines wechselweise auf Druck und Zug beanspruchten Verbindungsgliedes ist ein Pleuel für Hubkolbenmotoren zu betrachten. Diese Pleuel bestehen meistens aus geschmiedetem Stahl, Temperguss oder Gusseisen mit Kugelgraphit.

Weitere Beispiele sind Schäkel für die Flügelaufhängung am Rumpf von Luft- und Raumfahrzeugen, sowie Pleuel für Kolbenkompressoren.

Bei bekannten Verbindungsgliedern, z.B. Pleuel, werden die Zug- und Druckkräfte ausschliesslich vom gleichen Körper übertragen. Dies bedeutet, dass es nicht möglich ist, solche Verbindungsglieder optimal zu dimensionieren, weil ein vorwiegend für Druckschwellbelastung oder vorwiegend für Zugschwellbelastung geeigneter Werkstoff nicht ebenfalls für eine Zug-/Druck-Wechselbelastung optimal ist. Infolgedessen muss bei der Werkstoffwahl ein Kompromiss gefunden werden, was zu überdimensionierten Verbindungsgliedern führt.

Für die Senkung des Treibstoffverbrauchs ist die Automobilindustrie zunehmends an optimierten, z.B. leichten Bauteilen interessiert. Es wurden deshalb Versuche unternommen, das Gewicht von Pleueln und Schäkeln durch Verwendung faserverstärkter Kunststoffe oder Metallen mit hoher spezifischer Festigkeit gegenüber den üblichen Ausführungen zu senken.

In der DE-A 30 29 972 ist ein Pleuel mit einem durch ein Faserbündel verstärkten Steg beschrieben. Obschon bei dieser Ausführung eine Gewichtseinsparung erzielt werden kann, ist eine Herstellung solcher Pleuel in grossen Mengen zu günstigen Preisen nicht vorstellbar. Ferner kommt hinzu, dass nicht der ganze pleuel Faserbündel aufweist. Somit sind Schwachstellen dort vorhanden, wo die Faserbündel enden.

Ferner ist in der DE-A 26 57 832 ein Schäkel beschrieben, in dem Faserverbundwerkstoffe verwendet werden. Diese Ausführung ist für Schäkel in kleineren Stückzahlen ausgelegt und zur Herstellung von grösseren Stückzahlen zu niedrigen Preisen ungeeignet. Ausserdem sind die vorwiegend auf Zug belasteten Teile mit den vorwiegend auf Druck belasteten Teilen derart verbunden, z.B. verklebt, dass sie zusammen einen Teil bilden.

Aus der DE-B- 2918028 ist weiter ein Verfahren zum Anbringen eines Pleuels auf dem Hubzapfen einer einteiligen Kurbelwelle bekannt geworden. Dabei werden die einzelnen Pleuelteile auf die Kurbelwelle aufgespannt, die dann durch Aufbringen eines Matrixmaterials aus Kunstharz und durch Umwickeln mit Verstärkungsfasern zusammengehalten werden.

Nachteilig bei diesem Verfahren ist der komplizierte Fertigungsaufwand. Zudem ist die Entflechtung der verschiedenen Spannungsbeanspruchungen auf einzelne Pleuelteile nicht vorgesehen.

Aufgabe der vorliegenden Erfindung ist somit die Schaffung eines Verbindungsgliedes aus Metall und Kunststoff sowie eines Verfahrens zu dessen Herstellung auf einfache und preisgünstige Art. Dabei soll das Verbindungsglied den z.B. bei Pleueln auftretenden Zug- und Druckspannungen gewachsen und dauerhaft sein, wobei dies durch Entflechtung auf einzelne Teilbereiche des Verbindungsgliedes geschieht. Eine weitere Bedingung ist ferner, dass das Verbindungsglied die bei Ottomotoren auftretenden Temperaturen problemlos aushalten soll. Schliesslich soll das Verbindungsglied durch vereinfachte fertigungstechnische Massnahmen für eine rationelle Massenproduktion geeignet sein.

Diese Aufgabe ist erfindungsgemäss mit der Lehre gemäss dem gekennzeichneten Teil der Ansprüche 1 und 8 gelöst.

Ausführungsformen dieser Lehre sind in den abhängigen Ansprüchen beschrieben.

Die so geschaffene Lösung ist sowohl für Pleuel als auch für Schäkel geeignet und ermöglicht die Herstellung von preisgünstigen und dauerhaften Produkten. Die Einfachheit der Fertigung gestattet die Massenherstellung von preisgünstigen Pleueln z.B. für den Automobil- und Motorradbau.

Es ist zwar aus der nicht vorveröffentlichten älteren EP-A-0052993 bekannt, die Lagerteile eines Verbindungsgliedes zusammen zupressen, eine Schlaufe darum zu legen und die Schlaufe durch Aufheben der Pressung zu spannen. Die Schlaufe besteht aus faserverstärktem Material und nimmt Zugspannung auf.

Gegenüber diesem Stand der Technik nach Artikel 54(3) EPÜ ist neu, dass mindestens ein Lager längs einer Ebene senkrecht zur Längsachse des Stegelementes geteilt ist und dass der am Stegelement anliegende Teil des Lagers mit diesem einstückig ausgebildet ist.

Auch herstellungsmässig unterscheidet sich das vorgeschlagene Verbindungsglied vom Bekannten, dadurch dass die relative Länge des Steg und Riemenschlaufe zueinander durch äussere Einwirkung derart verändert wird, dass ein Einsetzen der Lagerteile und des Steges in die Riemenschlaufe möglich ist und anschliessend die äussere Einwirkung wieder aufgehoben wird, wobei die äussere Einwirkung durch Vorspannen und Dehnen der Riemenschlaufe erfolgt und eine Restspannung übrig bleibt, welche die Teile unter Betriebsbedingungen zusammenhält.

Nachfolgend werden Ausführungsbeispiele des Gegenstandes der Erfindung anhand der Zeichnung näher erläutert.

Es zeigen:

Fig. 1 eine Aufsicht des Pleuels,

Fig. 2 einen Querschnitt durch den Pleuel längs der Linie I - I in Fig. 1,

Fig. 3 eine Aufsicht eines Lagerkörpers,

Fig. 4 eine Variante zum Schaft und Lager nach Fig. 1, und

Fig. 5 eine Seitenansicht längs der Schnittlinie 14 in Fig. 1.

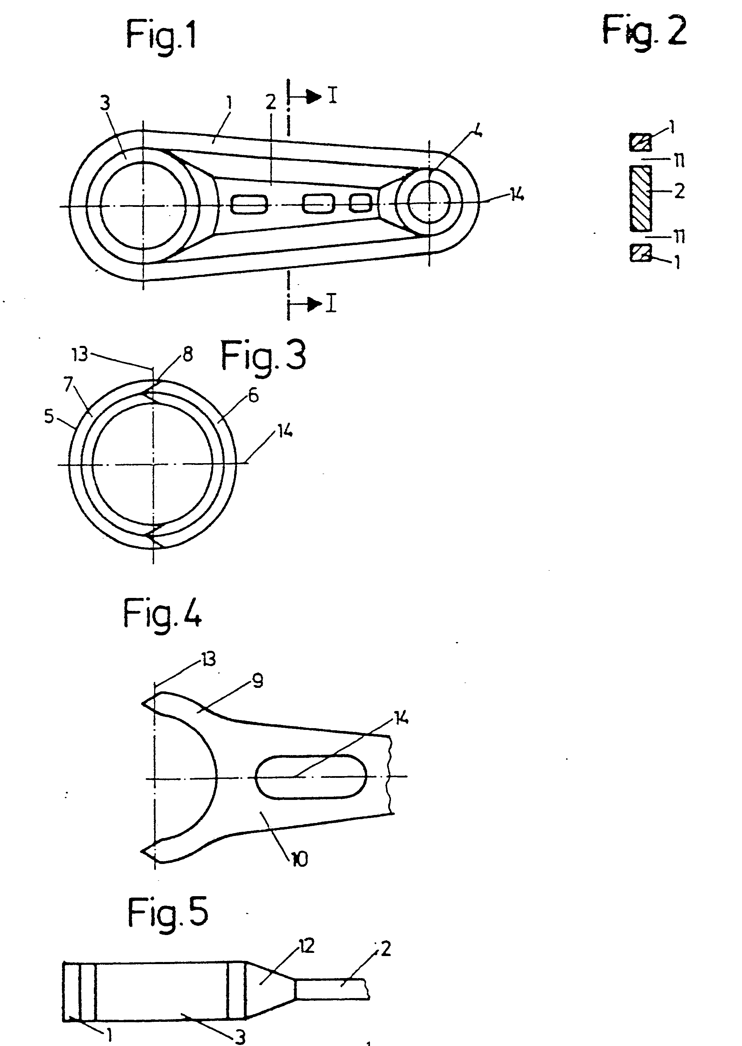

In Fig. 1 ist ein Pleuel mit einem Schaft oder Steg 2 aus gegossenem Eisen und einer Schlaufe 1 aus faserverstärktem Kunststoff dargestellt. An einem Ende des Pleuels befindet sich ein Lager 3 zur Aufnahme der Kurbelwelle und am anderen Ende ein Lager 4 für die Aufnahme des Kolbenbolzens. Bei dieser Ausführung handelt es sich um einen Pleuel für Einzylindermotoren, Zweizylindermotoren mit Antrieb in der Mitte der Kurbelwelle sowie Mehrzylindermotoren mit zusammengesetzter Kurbelwelle.

Zur Herstellung der Schlaufe 1 werden Rovings, z.B. aus Glas-, Aramid- oder Kohlenstoffasern, in ein flüssiges Kunststoffharz getaucht und auf einen entsprechend dimensionierten Formkörper aufgewickelt und ausgehärtet. Es können dabei eine grosse Anzahl von Schlaufen 1 nebeneinander hergestellt werden, die nach der Aushärtung in einzelne Schlaufen 1 aufgetrennt werden. Diese Trennung kann z.B. mittels einer Säge oder dergleichem erfolgen.

Die Stege 2 werden ebenfalls in grösserer Anzahl gegossen und anschliessend bearbeitet und kalibriert.

Die Lagerkörper 3 und 4 können z.B. von Stahlrohren abgetrennt werden, die auf der Innenseite bereits mit einem Lagermetall versehen sind. Das Lagermetall kann aber auch von Rohren abgetrennt und in die Stahlrohre eingepresst werden.

Bei der Herstellung derartiger Pleuel werden die Lager 3 und 4 in die beiden Enden der Schlaufe 1 eingelegt.

Die Schlaufe 1 wird im elastischen Bereich mittels in die Lager gesteckter Bolzen durch eine Spannvorrichtung derart erweitert, dass der Steg 2 eingeschoben werden kann. Danach wird die Schlaufe 1 entspannt, wobei sie den Steg 2 und die Lager 3, 4 unter der restlichen Vorspannung zusammenhält. Die derart aufgebaute Vorspannung reicht aus, um die Teile 2, 3 und 4 selbst bei den extremsten Betriebsbedingungen zusammenzuhalten.

Ein geteiltes Lager 5, z.B. für nicht zusammensetzbare Kurbelwellen, ist in Fig. 3 gezeigt, wobei das Lager 5 diametral in zwei Hälften 6, 7 geteilt ist. Damit die beiden Hälften 6, 7 in der richtigen Stellung zusammengehalten werden, können deren Enden mit Keilen 8 (Fig. 3) oder Nuten versehen werden.

Bei der Montage des Pleuels nach Fig. 1 und 3 auf die Kurbelwelle wird zunächst die eine Hälfte 7 des Lagerkörpers 5 auf die Kurbelwelle angeordnet und dann die Schlaufe 1 über die Kurbelwelle geschoben und auf die Hälfte 7 gelegt. Danach wird die andere Hälfte 6 mit der Hälfte 7 verbunden und die Schlaufe 1 mit dem Lagerkörper 4 unter Spannung gesetzt, wonach der Steg 2 eingesetzt werden kann.

In der dargestellten Ausführung ist das Lager 5 längs einer Ebene 13 senkrecht zur Längsachse 14 des Stegs 2 geteilt.

Wie es in Fig. 4 gezeigt ist, kann die eine Hälfte 9 einstückig mit dem Steg 2 bzw. 10 ausgebildet sein. Die Montage lässt sich dann in ähnlicher Weise durchführen, wie bei der Ausführung nach Fig. 3.

Damit der Flächendruck zwischen dem Steg 2 und den Lagerkörpern 3 und 4 nicht zu hoch wird, kann der Steg 2 an seinen beiden Enden mit einem Abschnitt 12 mit grösserer Dicke versehen werden, wie dies aus Fig. 5 hervorgeht.

Für die Herstellung des Pleuels, Schäkels oder dergleichen kommen u.a. folgende Werkstoffe in Frage:

### Werkstoffbeispiele

#### Schlaufe:

Für die Uebertragung der Zugschwellspannungen sind z.B. verwendbar:
- faserverstärkte Kunststoffe, mit Glas-, Carbon- oder Aramidfasern und Epoxiden, Polyimiden oder Phenolharzen
- Band oder Drähte aus Metall, z.B. Stahldraht, eventuell in Verbindung mit einer Elastomer - Matrix,
- faserverstärkte Metalle.

#### Steg:

Für die Uebertragung der Druckschwellspannungen sind z.B. geeignet:
- gegossene oder geschmiedete Eisen- oder Leichtmetalle
- faserverstärkte Metalle,
- Bleche aus Eisen oder Leichtmetall,
- verstärkte Kunststoffe, z.B. bor- oder siliziumcarbidfaserverstärkte Kunststoffe.

#### Lager:

Für die Lager sind z.B. geeignet:
- Hochfeste Stahlrohre mit eingepresster Lagerschale oder mit aufgegossenem Lagermetall (Bimetall-Rohre),
- Kunststoffrohre, z.B. aus kohlenfaserverstärktem Kunststoff.

Der beschriebene Pleuel hat gegenüber bestehenden Pleueln u.a. die folgenden Vorteile. Er

a) lässt sich aus belastungsoptimierten Zug-, Druck- und Lagerelementen herstellen,

b) lässt sich aus Einzelteilen in einem Baukastensystem zusammenbauen,

c) hat keine Schraubverbindung und bietet dadurch zusätzliche Gewichts- und Sicherheitsvorteile,

d) ist geeignet für eine Massenproduktion, und
e) ermöglicht eine starke Reduktion der oszillierenden und rotierenden Masse.

Das an Beispielen von Pleueln beschriebene, hybride Verbindungsglied ist auch für eine weitere Anzahl von Verwendungen einsetzbar. Derartige Verbindungsglieder sind z.B. auch als Schäkel verwendbar, in denen das Verbindungsglied einer wechselnden Zug- und Druckbelastung ausgesetzt ist.

**Patentansprüche**

1. Verbindungsglied aus Metall und Kunststoff, das wechselnden Druck- und Zugbeanspruchungen ausgesetzt ist, insbesondere Pleuel oder Schäkel, bei dem zwei Lager (3, 4) und ein Steg (2) zur Aufnahme der Druckkräfte - von einer geschlossenen Riemenschlaufe (1) - zur Aufnahme der Zugkräfte - formschlüssig umgeben und zusammengehalten sind, dadurch gekennzeichnet, dass mindestens ein Lager (5) längs einer Ebene (13) senkrecht zur Längsachse (14) des Steges (2) geteilt ist, und dass der am Steg anliegende Teil (9) des Lagers (5) mit diesem einstückig ausgebildet ist, und dass die getrennten Teile durch die elastische, vorgefertigte Riemenschlaufe (1), die sich im entspannten Zustand nicht um diese Teile legen lässt, kraftschlüssig durch Vorspannung zusammengehalten sind.

2. Verbindungsglied nach Anspruch 1, dadurch gekennzeichnet, dass ein Lager (3, 4) vom Steg (2, 10) getrennt ist.

3. Verbindungsglied nach Anspruch 1, dadurch gekennzeichnet, dass die Schlaufe (1) aus faserverstärktem Kunststoff besteht.

4. Verbindungsglied nach Anspruch 1, dadurch gekennzeichnet, dass die Schlaufe (1) ganz oder teilweise aus Metall besteht.

5. Verbindungsglied nach Anspruch 1, dadurch gekennzeichnet, dass der Steg (2) aus verstärktem Kunststoff besteht.

6. Verbindungsglied nach Anspruch 1, dadurch gekennzeichnet, dass der Steg (2) aus Metall besteht.

7. Verbindungsglied nach Anspruch 1, dadurch gekennzeichnet, dass die Lager (4, 5) derart ausgebildet sind, dass sie unter Vorspannung einen kreisrunden Innenumfang aufweisen.

8. Verfahren zum Herstellen eines Verbindungsgliedes nach Anspruch 1, dadurch gekennzeichnet, dass die relative Länge von Steg (2) und Riemenschlaufe (1) zueinander durch äussere Einwirkung derart verändert wird, dass ein Einsetzen der Lagerteile (3, 4) und des Steges (2) in die Riemenschlaufe (1) möglich ist und anschliessend die äussere Einwirkung wieder aufgehoben wird, wobei die äussere Einwirkung durch Vorspannen und Dehnen der Riemenschlaufe (1) erfolgt und eine Restspannung übrig bleibt, welche die Teile unter Betriebsbedingungen zusammenhält.

9. Verfahren zur Herstellung eines Pleuels nach Anspruch 1, auf einer Kurbelwelle, dadurch gekennzeichnet, dass man an der Kurbelwelle auf den Kurbelzapfen die geschlossene Riemenschlaufe (1) aufbringt und die Lager (3, 4) und den Steg (2) darin anordnet indem man durch äussere Einwirkung die Längenverhältnisse zwischen Steg (2) und Riemenschlaufe (1) verändert und anschliessend die äussere Einwirkung wieder aufhebt, wobei in der Riemenschlaufe eine Restspannung übrig bleibt, welche die Pleuelteile unter Betriebsbedingungen zusammenhält.

10. Verfahren nach Anspruch 8, dadurch gekennzeichnet, dass die Restspannung dadurch entsteht, dass die gedehnte Riemenschlaufe (1) durch die darin angeordneten Pleuelteile am vollständigen Entspannen gehindert wird.

11. Verfahren nach Anspruch 8, dadurch gekennzeichnet, dass die Restspannung dadurch entsteht, dass der vorgängig durch Kühlen geschrumpfte Steg sich durch Wiedererwärmung dehnt und die Riemenschlaufe spannt.

**Claims**

1. Connecting element of metal and plastics, which is exposed alternately to pressure- and tensile stresses, in particular connecting rods or link chains, in which two bearings (3, 4) and a crosspiece (2) for absorbing the pressure forces - from a closed belt loop (1) - for absorbing the tensile forces - are enclosed in form-fit manner and are held together, characterised in that at least one bearing (5) is divided along a plane (13) perpendicular to the longitudinal axis (14) of the crosspiece (2), and in that the part (9) of the bearing (5) which is adjacent to the crosspiece is constructed in one piece with this, and in that the separated parts are held together in force fit manner by means of prestressing by the resilient prefabricated belt loop (1) which in the relaxed state can not be laid round these parts.

2. Connecting element according to claim 1, characterised in that one bearing (3, 4) is separated from the cross piece (2, 20).

3. Connecting element according to claim 1, characterised in that the loop (1) comprises fibre-reinforced plastics material.

4. Connecting element according to claim 1, characterised in that the loop (1) is completely or partly made of metal.

5. Connecting element according to claim 1, characterised in that the crosspiece (2) is of reinforced plastics material.

6. Connecting element according to claim 1, characterised in that the crosspiece (2) is made of metal.

7. Connecting element according to claim 1, characterised in that the bearings (4, 5) are made in such a way that they have a circular inner circumference which is prestressed.

8. Process for the production of a connecting element according to claim 1, characterised in that the relative length of the crosspiece (2) and the belt loop (1) to each other is altered by external influence in such a way that insertion of the bearing parts (3, 4) and of the crosspiece (2) into the belt loop (1) is possible and then the external influence is again lifted, whereby the external influence is caused by prestressing and stretching of the belt loop (1) and there remains a residual stressing which holds the parts together under operating conditions.

9. Process for the production of a connecting rod according to claim 1 on a crankshaft, characterised in that the closed belt loop (1) is placed onto the crankshaft pin on the crankshaft, and the bearings (3, 4) and the crosspiece (2) are arranged in it, and thus the longitudinal relationships between the crosspiece (2) and the belt loop (1) are changed by external influence, and then the external influence is again lifted, whereby in the belt loop there remains a residual tension which holds together the connecting rod parts under operating conditions.

10. Process according to claim 8, characterised in that the residual tension results from the fact that the stretched belt loop (1) is prevented from complete relaxation by the connecting rod parts arranged therein.

11. Process according to claim 8, characterised in that the residual tension results from the fact that the crosspiece,which has been previously shrunk by cooling, expands by means of reheating and tensions the belt loop.

**Revendications**

Elément de liaison en métal et matière plastique, soumis à des efforts alternés de compression et de traction, et notamment bielle ou manille,dans lequel deux paliers (3, 4) et un corps (2) absorbant les efforts de compression sont entourés et maintenus par conjugaison de forme par une courroie fermée (1) absorbant les efforts de traction, ledit élément étant caractérisé en ce qu'un palier(5) au moins estdivisé suivant un plan (13) perpendiculaire à l'axe longitudinal (14) du corps (2), la partie (9) du palier (5) adjacente au corps (2) forme une seule pièce avec ce dernier, et les pièces séparées sont maintenues assemblées par précontrainte, par conjugaison de forces par la courroie (1) élastique préfabriquée qui, à l'état détendu, ne peut pas se placer autour de ces pièces.

2. Elément de liaison selon revendication 1, caractérisé en ce qu'un palier (3, 4) est séparé du corps (2, 10).

3. Elément de liaison selon revendication 1, caractérisé en ce que la courroie (1) est en matière plastique renforcée par fibres.

4. Elément de liaison selon revendication 1, caractérisé en ce que la courroie (1) est totalement ou partiellement en métal.

5. Elément de liaison selon revendication 1, caractérisé en ce que le corps (2) est en matière plastique renforcée.

6. Elément de liaison selon revendication 1, caractérisé en ce que le corps (2) est en métal.

7. Elément de liaison selon revendication 1, caractérisé en ce que les paliers (4, 5) sont réalisés de façon à présenter sous précontrainte une circonférence intérieure circulaire.

8. Procédé pour la production d'un élément de liaison selon revendication 1, caractérisé en ce que la longueur relative du corps (2) et de la courroie (1) est modifiée par une action extérieure de façon à permettre l'introduction des pièces de palier (3, 4) et du corps (2) dans la courroie (1), puis on supprime l'action extérieure, qui est obtenue par prétension et allongement de la courroie (1) avec production d'une tension résiduelle qui maintient les pièces assemblées dans les conditions de fonctionnement.

9. Procédé pour la production d'une bielle selon revendication sur le vilebrequin, caractérisé en ce que l'on met en place la courroie fermée (1) sur le maneton du vilebrequin et l'on introduit les paliers (3, 4) et le corps (2) dans la courroie en modifiant la longueur relative du corps (2) et de la courroie (1) par une action extérieure, puis on supprime l'action extérieure, une tension résiduelle dans la courroie maintenant les pièces de la bielle assemblées dans les conditions de fonctionnement.

10. Procédé selon revendication 8, caractérisé en ce que la tension résiduelle résulte de ce que les pièces de la bielle disposées dans la courroie (1) allongée interdisent sa détente totale.

11. Procédé selon revendication 8, caractérisé en ce que la tension résiduelle résulte de ce que le corps préalablement restreint par refroidissement s'allonge en se réchauffant et tend ainsi la courroie.

# Fig.1

# Fig.2

# Fig.3

# Fig.4

# Fig.5